# EUROPÄISCHE PATENTSCHRIFT

(11) **EP 4 039 224 B1**
(45) Veröffentlichungstag und Bekanntmachung des Hinweises auf die Patenterteilung: **06.09.2023**
(21) Anmeldenummer: 22164308.3
(22) Anmeldetag: 04.05.2015
(51) Int. Cl.: A61C 13/00, B23Q 1/54, B23Q 3/00

(54) **WERKSTÜCKTRÄGER**
WORKPIECE CARRIER
PORTE-PIÈCE

(30) Priorität: 07.05.2014 DE 102014106331
(43) Veröffentlichungstag der Anmeldung: 10.08.2022
(62) Teilanmeldung aus: 15730040.1
(73) Patentinhaber: Amann Girrbach AG, 6842 Koblach (AT)
(72) Erfinder: Schelling, Peter, 6842 Koblach (AT)
(74) Vertreter: Grünecker Patent- und Rechtsanwälte PartG mbB

(56) Entgegenhaltungen:
- EP-A1- 1 186 373
- DE-A1-102011 109 939

## Beschreibung

Die vorliegende Erfindung betrifft eine Verwendung eines Werkstückträgerteils in einem Verfahren zur Korrektur der Achslage eines Werkstückträgers und in einem Verfahren zur materialabtragenden Bearbeitung eines dentalen Werkstücks in einer den Werkstückträger aufweisenden Bearbeitungsmaschine.

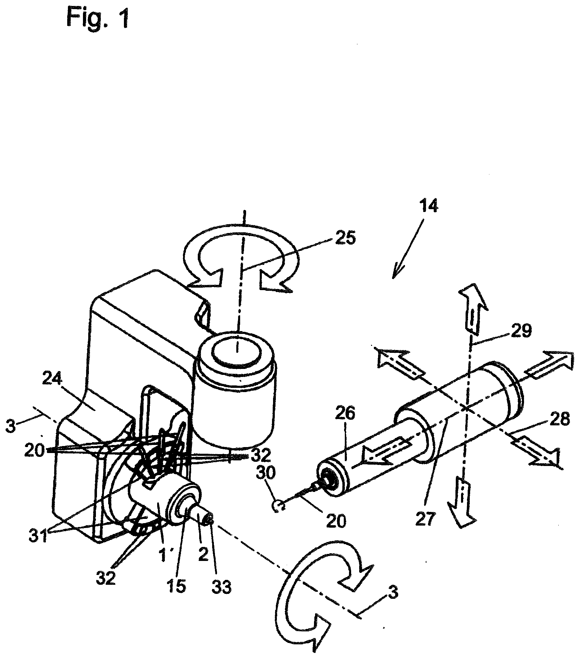

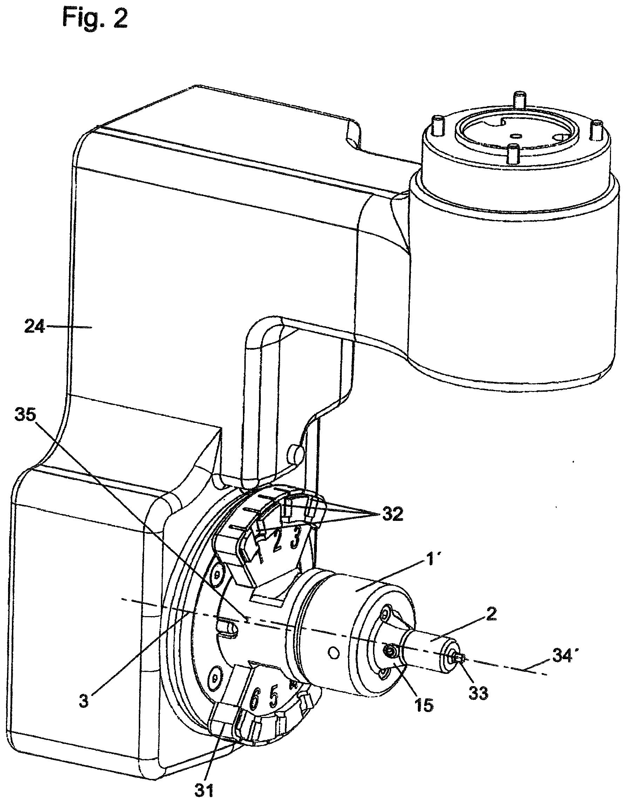

Die EP 1 186 373 A1 zeigt eine Spannvorrichtung, insbesondere für mehrere zu bearbeitende Werkstücke, mit einem koaxialen Aufnahmeflansch und einem koaxialen zylindrischen Lagerzapfen. In der DE 10 2011 109 939 A1 ist eine Aufspannvorrichtung für eine Bearbeitungsmaschine gezeigt, bei der beim Zusammenbau eine Bolzenaufnahme am Werkstückträger auf einen Bolzen gesteckt wird. Die WO 2013/020147 A1 zeigt beispielsweise eine Bearbeitungsmaschine zur materialabtragenden Bearbeitung eines dentalen Werkstücks. Während der materialabtragenden Bearbeitung ist das Werkstück in einem Werkstückträger gehalten. In der WO 2013/020147 A1 kann der Werkstückträger zusammen mit dem Werkstück um eine Antriebsrotationsachse rotiert bzw. gedreht werden, um eine optimale Zugänglichkeit für das materialabtragende Werkzeug, z.B. einen Fräs- oder Schleifkopf zu schaffen. In der WO 2013/020147 A1 sind die dort verwendeten Werkstückträger allerdings nicht darauf ausgelegt, dass das vom Werkstückträger gehaltene Werkstück während der materialabtragenden Bearbeitung gemeinsam mit dem Werkstückträger um die Antriebsrotationsachse rotiert wird. Hierzu, also für das sogenannte Rotationsbearbeiten, bei dem das Werkstück, vorzugsweise permanent, während der materialabtragenden Bearbeitung um die Antriebsrotationsachse rotiert wird, sind andere Werkstückträger von Nöten. Die Fig. 1 und 2 dieser Anmeldung zeigen einfache Ausgestaltungsformen solcher Werkstückträger.

Die Praxis zeigt, dass beim Rotationsbearbeiten mit solch einfachen Werkstückträgern, wie sie in den Fig. 1 und 2 dieser Anmeldung gezeigt sind, Probleme mit der Achslage auftreten. Konkret sind in der Praxis Abweichungen bzw. Versätze zwischen der durch das Werkstück verlaufenden Symmetrieachse und/oder Werkstückrotationsachse und der Antriebsrotationsachse zu beobachten. Diese sind auf Ungenauigkeiten in der Ausfertigung des Werkstückträgers und/oder auch der Antriebswelle der Bearbeitungsmaschine begründet. Durch diese Versätze in der Achslage kommt es zu Unwuchten beim Rotieren des Werkstücks, was bei der materialabtragenden Bearbeitung mittels Rotationsbearbeitung unbedingt vermieden werden sollte.

Aufgabe der Erfindung ist es, eine Verwendung eines Werkstückträgerteils zu schaffen, bei der solche Fehler in der Achslage korrigiert werden können.

Dies wird erfindungsgemäß durch eine Verwendung eines Werkstückträgerteils gemäß Patentanspruch 1 oder 5 erreicht.

Es ist beim Werkstückträger vorgesehen, dass der Werkstückträger zumindest zwei voneinander trennbare und miteinander verbindbare Wertstückträgerteile aufweist, wobei eines der Werkstückträgerteile zumindest einen Kompensationsbereich mit einem Materialüberstand zur materialabtragenden Einbringung einer Ausgleichsfläche aufweist und das andere der Werkstückträgerteile eine Sitzfläche zum formschlüssigen Verbinden mit der Ausgleichsfläche aufweist.

In anderen Worten ist der Werkstückträger mehrteilig aufgebaut. An zumindest einem dieser Werkstückträgerteile ist ein Kompensationsbereich mit einem Materialüberstand vorhanden, in den durch Materialabtrag eine Ausgleichsfläche zur Kompensation bzw. Korrektur von Fehlern in der Achslage eingearbeitet werden kann. Auf diese Ausgleichsfläche kann dann nach dieser materialabtragenden Bearbeitung die Sitzfläche zumindest eines anderen der Werkstückträgerteile formschlüssig aufgesetzt werden. Die Sitzfläche und die Ausgleichsfläche bilden dabei bevorzugt einen spielfreien Formschluss. Bei bevorzugten Varianten ist vorgesehen, dass vor der Ausbildung der Ausgleichsfläche im Kompensationsbereich mittels Materialabtrag die Werkstückträgerteile aufgrund des dann noch vollständig vorhandenen Materialüberstands im Kompensationsbereich nicht oder zumindest nicht so wie nach der Ausbildung der Ausgleichsfläche miteinander verbunden werden können.

Es ist in diesem Zusammenhang darauf hinzuweisen, dass der Formschluss zwischen Sitzfläche und Ausgleichsfläche dauerhaft vorhanden sein kann aber nicht muss. Es kann zur exakten Ausrichtung der Werkstückträgerteile zueinander gemäß der Erfindung auch ausreichen, dass der Formschluss zwischen Sitzfläche und Ausgleichsfläche nur beim Verbinden von Sitzfläche und Ausgleichsfläche bzw. der Werkstückträgerteile gegeben ist. Es kann zum Beispiel vorgesehen sein, dass während dieser Formschluss gegeben ist, die Werkstückträgerteile, zum Beispiel durch Verkleben, Verlöten, Verschweißen, Verschrauben oder dergleichen, evtl. auch an anderer Stelle zusätzlich, vorzugsweise stoffschlüssig, miteinander verbunden werden, sodass der Formschluss zwar beim Verbinden von Sitzfläche und Ausgleichsfläche miteinander für eine exakte Ausrichtung sorgt. Hinterher aber, wenn die exakte Ausrichtung der Werkstückträgerteile durch andere Verbindungsarten aufrecht erhalten bleibt, kann der Formschluss zwischen Sitzfläche und Ausgleichsfläche auch wieder entfernt werden. So ist es zum Beispiel möglich den Formschluss zwischen Sitzfläche und Ausgleichsfläche über einen Verbindungsadapter herzustellen, die Werkstückträgerteile dann stoffschlüssig oder anderweitig zusätzlich dauerhaft miteinander zu verbinden und den Verbindungsadapter und damit den Formschluss dann wieder zu entfernen. Dies wird weiter hinten ebenfalls mittels eines Ausführungsbeispiels veranschaulicht.

Die Ausgleichsfläche, welche durch die genannte materialabtragende Bearbeitung in den Kompensationsbereich eingebracht wird, ist bevorzugt bereichsweise oder vollständig zylindermantelförmig oder anderweitig rotationssymmetrisch ausgebildet. Die Ausgleichsfläche wird bevorzugt so in den Kompensationsbereich eingearbeitet, dass eine Symmetrieachse der durch die materialabtragende Bearbeitung ausgebildeten zylindermantelförmigen oder anderweitig rotationssymmetrischen Form der Ausgleichsfläche koaxial zur Antriebsrotationsachse liegt. Bevorzugt ist die Ausgleichsfläche vollständig zylindermantelförmig oder zumindest vollständig rotationssymmetrisch bezüglich der Symmetrieachse ausgeführt. Dies muss aber nicht zwingend so sein. Es reicht auch aus, wenn die Ausgleichsfläche nur teilweise zylindermantelförmig oder anderweitig rotationssymmetrisch ausgebildet wird. Im letztgenannten Fall ist aber günstigerweise vorgesehen, dass gegebenenfalls vorhandene, von der zylindermantelförmigen oder anderweitig rotationssymmetrischen Form abweichende Oberflächenbereiche im Kompensationsbereich näher an der Symmetrieachse liegen als die zylindermantelförmige oder anderweitig rotationssymmetrische Form der Ausgleichsfläche. In anderen Worten sollen somit bevorzugt die von der zylindermantelförmigen oder anderweitig rotationssymmetrischen Form abweichenden Oberflächenbereiche von der Symmetrieachse aus gesehen in radialer Richtung nicht über die zylindermantelförmige oder anderweitig rotationssymmetrische Form der Ausgleichsfläche überstehen.

Bevorzugte Ausgestaltungsformen sehen vor, dass die Sitzfläche einen Hohlraum ummantelt, in den die Ausgleichsfläche zum formschlüssigen Verbinden der Sitzfläche mit der Ausgleichsfläche einführbar ist. Die Sitzfläche bildet in diesen Ausgestaltungsformen also eine Art Hülse, in die die Ausgleichsfläche eingeschoben bzw. eingeführt werden kann, so dass es zum Formschluss zwischen Sitzfläche und Ausgleichsfläche kommt. Im Sinne des genannten Formschlusses ist günstigerweise vorgesehen, dass auch die Sitzfläche bereichsweise oder vollständig zylindermantelförmig oder anderweitig rotationssymmetrisch ausgeformt ist. Die Sitzfläche besitzt günstigerweise eine Symmetrieachse, welche koaxial zur Symmetrieachse bzw. Werkstückrotationsachse des in den Werkstückträger eingesetzten Werkstücks ist. Natürlich ist hier auch die Anordnung andersherum möglich. So könnte auch die Ausgleichsfläche einen Hohlraum ummanteln, in den dann die Sitzfläche zur formschlüssigen Verbindung einführbar ist.

Bei bevorzugten Ausgestaltungsformen kann vorgesehen sein, dass eines der Werkstückträgerteile eine Befestigungseinrichtung zur Befestigung des Werkstückträgers an einer, um die Antriebsrotationsachse rotierbaren Antriebswelle einer Bearbeitungsmaschine aufweist. Dieses Werkstückträgerteil kann z.B. den Kompensationsbereich mit dem Materialüberstand aufweisen. Das andere Werkstückträgerteil oder ein anderes der Werkstückträgerteile kann einen Werkstückadapter zur Befestigung des Werkstücks am Werkstückträger aufweisen. An diesem anderen Werkstückträgerteil bzw. anderen der Werkstückträgerteile kann dann z.B. die Sitzfläche ausgeformt sein. Es ist natürlich auch die Anordnung anders herum möglich. So kann sich die Sitzfläche auch an dem Werkstückträgerteil befinden, welches die Befestigungseinrichtung zur Befestigung des Werkstückträgers an der Antriebswelle der Bearbeitungsmaschine aufweist. Entsprechendes gilt dann eben für den Kompensationsbereich und das andere der Werkstückträgerteile.

Um die Lage des Werkstücks während der materialabtragenden Bearbeitung in Längsrichtung der Antriebsrotationsachse möglichst exakt einstellen zu können, sehen bevorzugte Ausgestaltungsformen vor, dass an zumindest einem der Werkstückträgerteile ein Längsanschlag mit einem Materialüberstand zum materialabtragenden Einkürzen des Längsanschlags ausgebildet ist. Durch materialabtragende Bearbeitung und Abtragung zumindest eines Teils des Materialüberstandes kann der Längsanschlag sehr genau eingestellt werden, sodass ein später am Werkstückträger während der materialabtragenden Bearbeitung gehaltenes Werkstück in seiner Lage entlang der Antriebsrotationsachse sehr exakt positioniert ist.

Sollen aus dem am Werkstückträger später einmal gehaltenen Werkstücke Bauteile herausgearbeitet werden, welche nicht rotationssymmetrisch ausgebildet sind, so sehen bevorzugte Ausgestaltungsformen vor, dass an zumindest einem der Werkstückträgerteile ein Verdrehsicherungsbauteil mit einem Materialüberstand zur materialabtragenden Bearbeitung des Verdrehsicherungsbauteils ausgebildet ist. Durch dieses Verdrehsicherungsbauteil und dessen materialabtragende Bearbeitung ist es möglich, den Werkstückträger auch bezüglich einer Winkellage um die Antriebsrotationsachse herum exakt auszubilden, sodass es zu keinen Winkelabweichungen bzw. zu keinem um die Antriebsrotationsachse verdrehten Bearbeiten des Werkstückes kommt. Das am Werkstückträgerteil vorgesehene Verdrehsicherungsbauteil kann z.B. eine Einkerbung mit entsprechendem Materialüberstand sein. Genauso gut ist aber natürlich auch ein vorstehendes Bauteil als Verdrehsicherungsbauteil mit einem entsprechenden Materialüberstand möglich.

Solche Verdrehsicherungen können z.B. dann vorgesehen sein, wenn am Werkstück eine sogenannte Anschlussgeometrie bereits vorhanden oder herausgearbeitet werden soll. Diese Anschlussgeometrie kann z.B. so ausgebildet sein, dass sie nur in einer einzigen Stellung in ein anderes Bauteil wie z.B. ein in den Kiefer einzusetzendes Implantat eingesetzt werden kann, sodass der künstliche Zahn, welcher mittels des aus dem Werkstück herauszuarbeitenden Bauteils am Implantat befestigt wird, nur in einer einzigen eindeutigen Stellung im Implantat befestigt werden kann. Solche Anschlussgeometrien können z.B. unregelmäßige Mehrkantbauteile oder dergleichen sein.

Eine Minimalvariante sieht einen zweiteiligen Werkstückträger vor. In diesen Minimalvarianten hat eines der Werkstückträgerteile den Kompensationsbereich. Das andere der Werkstückträgerteile weist die Sitzfläche auf.

In der Regel werden die Werkstückträgerteile aus einem sehr festen Material wie z.B. Stahl oder dergleichen hergestellt. In diesen Fällen kann die materialabtragende Bearbeitung des Kompensationsbereichs zur Einbringung der Ausgleichsfläche aufwendig sein. Z.B. aus diesem Grund sind auch Varianten mit mehr als zwei Werkstückträgerteilen interessant. So kann z.B. vorgesehen sein, dass der Werkstückträger zumindest drei Werkstückträgerteile aufweist, wobei der Kompensationsbereich und/oder der gegebenenfalls vorhandene Längsanschlag und/oder das gegebenenfalls vorhandene Verdrehsicherungsbauteil an einem, zwischen zwei der anderen Werkstückträgerteile angeordneten oder anzuordnenden, mittleren Werkstückträgerteil ausgebildet ist. Das mittlere Werkstückträgerteil kann dann z.B. aus einem weicheren Material bzw. Metall, wie z.B. Aluminium, gefertigt werden, um den Aufwand bei der Einbringung der Ausgleichsfläche herabzusetzen. Gleiches gilt für den gegebenenfalls vorhandenen Längsanschlag und/oder das gegebenfalls vorhandene Verdrehsicherungsbauteil.

Wie bereits eingangs darauf hingewiesen wurde, sind die Werkstückträger für die materialabtragende Bearbeitung eines dentalen Werkstücks vorgesehen. Dies schließt aber natürlich nicht aus, dass mit diesen Werkstückträgern auch andere, nicht dentale Werkstücke bearbeitet werden können. Unter einem dentalen Werkstück ist allgemein ein Werkstück zu verstehen, aus dem ein Zahnersatz, ein Teil eines Zahnersatzes oder ein Hilfsmittel zur Herstellung oder Befestigung eines Zahnersatzes herausgearbeitet wird. Der Begriff des Zahnersatzes umfasst dabei sowohl Teil- als auch Vollprothesen. Weiters fallen beispielsweise auch Kronen, Brücken, Abutments und dergleichen unter den Begriff des Zahnersatzes. Vor bzw. zu Beginn der materialabtragenden Bearbeitung des dentalen Werkstücks ist das dentale Werkstück ein Rohling. Am Ende der materialabtragenden Bearbeitung ist aus dem dentalen Werkstück das dentale Bauteil geworden, wie es dann, gegebenenfalls noch weiter nachbehandelt, im Mund des Patienten eingesetzt wird. Bei der materialabtragenden Bearbeitung des dentalen Werkstücks ist letzteres am Werkstückträger gehalten. Bevorzugt wird das Werkstück zusammen mit dem Werkstückträger während der materialabtragenden Bearbeitung des Werkstücks permanent um die Antriebsrotationsachse rotiert. Es ist aber auch möglich, das Werkstück zusammen mit dem Werkstückträger nur zeitweise, intermittierend oder nur bei Bedarf während der materialabtragenden Bearbeitung des Werkstücks um die Antriebsrotationsachse zu rotieren. Das zur materialabtragenden Bearbeitung eingesetzte Werkzeug kann z.B. einen Fräskopf oder einen Schleifkopf aufweisen. Das Werkzeug kann bei der materialabtragenden Bearbeitung zusätzlich um eine eigene Achse rotiert werden. Die zu bearbeitenden dentalen Werkstücke können verschiedenartige Metalle wie z.B. auch Titan aufweisen oder daraus bestehen. Natürlich können die Werkstückträger auch zur materialabtragenden Bearbeitung von dentalen Werkstücken aus anderen Materialien wie z.B. Keramik oder Kunststoff eingesetzt werden. Die Werkstückträgerteile sind bevorzugt aus geeigneten Metallen hergestellt.

Bei dem Verfahren zur Korrektur der Achslage gilt es insbesondere, einen Versatz zwischen der Antriebsrotationsachse einer Bearbeitungsmaschine und der Symmetrieachse bzw. Werkstücksrotationsachse des zu bearbeitenden Werkstücks zu beseitigen bzw. von vornherein zu vermeiden. Hierfür wird bei einem Verfahren zur Korrektur der Achslage eines Werkstückträgers vorgesehen, dass das Werkstückträgerteil mit dem Kompensationsbereich an einer, um die Antriebsrotationsachse rotierbaren Antriebswelle einer Bearbeitungsmaschine befestigt wird und anschließend mittels Materialabtragung bei gleichzeitigem Rotieren der Antriebswelle samt Werkstückträgerteil um die Antriebsrotationsachse die Ausgleichsfläche mit einem materialabtragenden Werkzeug der Bearbeitungsmaschine in dem Kompensationsbereich ausgebildet wird.

Wie eingangs bereits ausgeführt, ist hierbei günstigerweise vorgesehen, dass die Ausgleichsfläche bereichsweise oder vollständig zylindermantelförmig oder anderweitig rotationssymmetrisch ausgebildet wird, wobei eine Symmetrieachse der ausgebildeten zylindermantelförmigen oder anderweitig rotationssymmetrischen Form der Ausgleichsfläche koaxial zur Antriebsrotationsachse liegt. Sollten von der zylindermantelförmigen oder anderweitig rotationssymmetrischen Form abweichende Oberflächenbereiche im Kompensationsbereich vorgesehen sein, so ist günstigerweise jedenfalls vorgesehen, dass diese gegebenenfalls vorhandenen, von der zylindermantelförmigen oder anderweitig rotationssymmetrischen Form abweichenden Oberflächenbereiche im Kompensationsbereich näher an der Symmetrieachse liegen als die zylindermantelförmige oder anderweitig rotationssymmetrische Form der Ausgleichsfläche. Das Verfahren zur Korrektur der Achslage des Werkstückträgers wird in derselben Bearbeitungsmaschine durchgeführt, wie die spätere materialabtragende Bearbeitung eines an diesem Werkstückträger gehaltenen Werkstücks. In diesem Sinn ist somit günstigerweise vorgesehen, dass der Werkstückträger für eine materialabtragende Bearbeitung des dentalen Werkstücks in gleicher Art und Weise an einer, um die Antriebsrotationsachse rotierbaren Antriebswelle einer Bearbeitungsmaschine und an derselben Antriebswelle befestigt wird, wie das Werkstückträgerteil mit dem Kompensationsbereich zur Ausbildung der Ausgleichsfläche im Kompensationsbereich befestigt wurde.

Weitere Merkmale und Einzelheiten bevorzugter Ausgestaltungsformen werden nachfolgend anhand von zwei Ausführungsbeispielen geschildert. Es zeigen:
Fig. 1 und 2 Darstellungen zum Stand der Technik und der mit der Erfindung zu lösenden Problemstellung;
Fig. 3 bis 6 Darstellungen zu einem ersten Ausführungsbeispiel eines Werkstückträgers;
Fig. 7 bis 9 ein Beispiel für ein aus dem dentalen Werkstück herauszuarbeitendes Bauteil und seine Verwendung;
Fig. 10 bis 15 Darstellungen zu einem zweiten Ausführungsbeispiel eines Werkstückträgers;
Fig. 16 bis 19 schematisierte Darstellungen zu verschiedenen Beispielen, wie eine Ausgleichsfläche ausgebildet sein kann und
Fig. 20 und 21 ein Ausführungsbeispiel bei dem der Formschluss zwischen Ausgleichsfläche und Sitzfläche über einen Verbindungsadapter hergestellt wird.

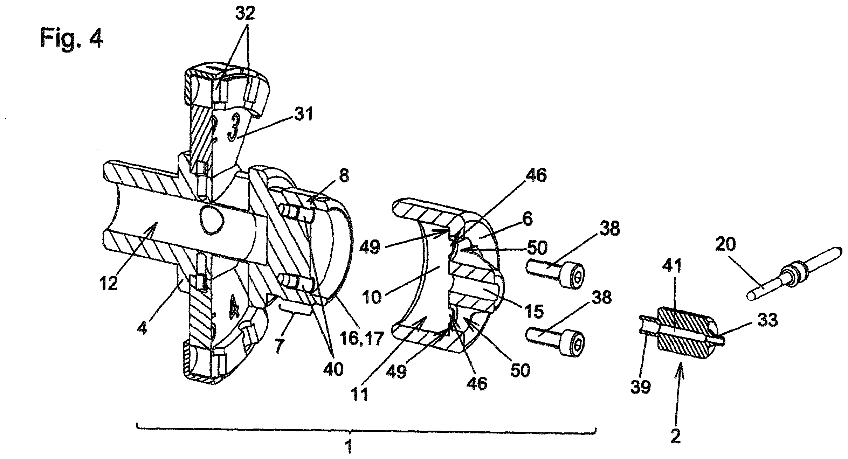

Bearbeitungsmaschinen 14 in denen Werkstückträger eingesetzt und zur Korrektur der Achslage bearbeitet werden können, können in unterschiedlichsten Ausgestaltungsformen ausgebildet sein. Als Beispiel für eine grundsätzlich geeignete Bearbeitungsmaschine 14 wird auf die in der WO 2013/020147 A1 gezeigte Bearbeitungsmaschine verwiesen. Fig. 1 zeigt eine, was die Bearbeitungsmaschine angeht, aus Fig. 4 der WO 2013/020147 A1 übernommene Anordnung von für die Erfindung benötigten Bauteilen der Bearbeitungsmaschine. Allerdings ist in Fig. 1 ein einfacher Werkstückträger 1' dargestellt, welcher zwar grundsätzlich eine materialabhebende Bearbeitung des Werkstücks 2 durch Rotationsbearbeiten ermöglicht, aber noch nicht erfindungsgemäß ausgebildet wurde. Beim Rotationsbearbeiten wird der Werkstückträger 1' zusammen mit dem Werkstück 2, vorzugsweise permanent, um die Antriebsrotationsachse 3 gedreht. Während dieser Drehbewegung um die Antriebsrotationsachse 3 wird das Werkstück 2 mittels des Werkzeugs 20 materialabtragend bearbeitet. Das Werkzeug 20 kann z.B. ein Fräs- oder Schleifkopf sein oder aufweisen. Auch Bohrer bzw. Bohrköpfe sind denkbar. Das Werkzeug 20 ist im Werkzeugträgerkopf 26 gehalten und mit diesem in die drei orthogonal zueinander stehenden Richtungen 27, 28 und 29 relativ zum Werkstück 2 bzw. Werkstückträger 1 bewegbar. Grundsätzlich wäre es denkbar, dass zum Materialabtrag am Werkstück 2 die Rotationsbewegung des Werkstücks 2 um die Antriebsrotationsachse 3 ausreicht. In bevorzugten Ausgestaltungsformen ist aber vorgesehen, dass das Werkzeug 20 von einem entsprechenden Antrieb im Werkzeugträgerkopf 26 in einer der Werkzeugrotationsrichtungen 30 während der materialabtragenden Bearbeitung des Werkstücks 2 rotiert wird. Dies ist aber, wie gesagt, optional. Während des Rotationsbearbeitens, also der gemeinsamen Rotation von Werkstück 2 und Werkstückträger 1' um die Antriebsrotationsachse 3 und der gleichzeitigen materialabtragenden Bearbeitung des Werkstücks 2 ist letzteres mittels des Werkstückadapters 15 am Werkstückträger 1' befestigt. Der Werkstückträger 1' wiederum weist eine in Fig. 1 nicht sichtbare Befestigungseinrichtung 12 zur Befestigung an der ebenfalls nicht sichtbaren Antriebswelle 13 des Tragarms 24 auf. Mittels der Antriebswelle 13 werden der Werkstückträger 1' und das Werkstück 2 jedenfalls um die Antriebsrotationsachse 3 rotiert. In Fig. 1 befindet sich am Werkstückträger 1' ein Werkzeughalter 31 mit verschiedenen Werkzeugaufnahmen 32. Dies ist natürlich optional. Die hier auch realisierte einstückige Ausbildung von Werkzeughalter 31 und Werkstückträger 1' ist aus der WO 2013/020147 A1 an sich bekannt und muss hier nicht weiter erläutert werden. In allen hier gezeigten Varianten könnte der Werkzeughalter 31 aber genauso gut weggelassen werden. In Fig. 1 wie auch in den nachfolgend erläuterten Ausführungsbeispielen ist der Tragarm 24 als Ganzes und damit auch zusammen mit dem Werkstückträger 1 und dem Werkstück 2 um eine Vertikalachse 25 schwenkbar. Dies ist günstig, um Hinterschnitte im Werkstück 2 herausarbeiten zu können. Diese Verschwenkbarkeit um die Vertikalachse 25, wie überhaupt die Bewegbarkeit des Tragarms 24 an sich sind aber optional. Es sind auch Ausführungsbeispiele der Erfindung möglich, bei denen der Tragarm 24 und damit auch die Antriebswelle 13 ortsfest angeordnet sind. Dies bedeutet natürlich nicht, dass die Antriebswelle 13 nicht mehr um die Antriebsrotationsachse 3 rotierbar ist.

Die restlichen, hier nicht dargestellten Bauteile der Bearbeitungsmaschine 14, können, wie beim Stand der Technik und z.B. in der WO 2013/020147 A1 gezeigt, ausgeführt sein.

Im gezeigten Ausführungsbeispiel weist bereits das noch nicht bearbeitete Werkstück 2 eine Anschlussgeometrie 33 zur Befestigung an einem Implantat 45 auf. Dies muss aber nicht zwingend so sein, eine entsprechende Anschlussgeometrie 33 kann, soweit benötigt, auch erst während der materialabtragenden Bearbeitung des Werkstücks 2 aus diesem herausgearbeitet werden.

Fig. 2 zeigt nun das mit der Erfindung zu lösende Problem anhand des hier dargestellten Werkstückträgers 1'. Dieses Problem liegt darin, dass es durch Ungenauigkeiten in der Fertigung des Werkstückträgers 1' oder Abweichungen in der Lage der Antriebswelle 13 bei verschiedenen Bearbeitungsmaschinen 14 bzw. deren Antriebswellen 13 dazu kommen kann, dass bei in den Werkstückadapter 15 eingesetztem Werkstück 2 die Werkstückrotationsachse 34', also die Symmetrieachse des Werkstücks 2, nicht exakt koaxial zur Antriebsrotationsachse 3, um die der Werkstückträger 1' zusammen mit dem Werkstück 2 gedreht wird, liegt. Verdeutlicht wird dies in Fig. 2 durch den Versatz 35 zwischen der Antriebsrotationsachse 3 und der Werkstückrotationsachse 34'. Dieser Fehler in der Achslage muss korrigiert werden, um eine möglichst exakte materialabtragende Bearbeitung des Werkstücks 2 beim Rotationsbearbeiten sicherzustellen. Um dieses Problem zu lösen, ist beim Werkstückträger 1 vorgesehen, dass der Werkstückträger 1 zumindest zwei voneinander trennbare und miteinander verbindbare Wertstückträgerteile 4, 5, 6 aufweist, wobei eines der Werkstückträgerteile 4, 5 zumindest einen Kompensationsbereich 7 mit einem Materialüberstand 8 zur materialabtragenden Einbringung einer Ausgleichsfläche 9 aufweist und das andere der Werkstückträgerteile 6 eine Sitzfläche 10 zum formschlüssigen Verbinden mit der Ausgleichsfläche 9 aufweist.

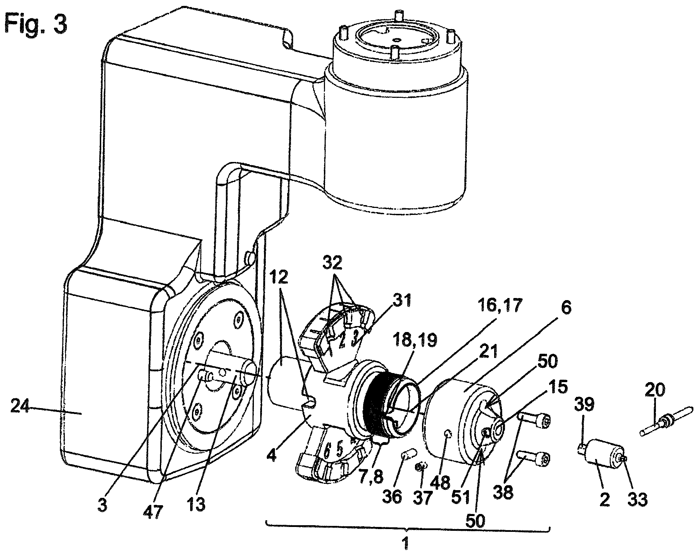

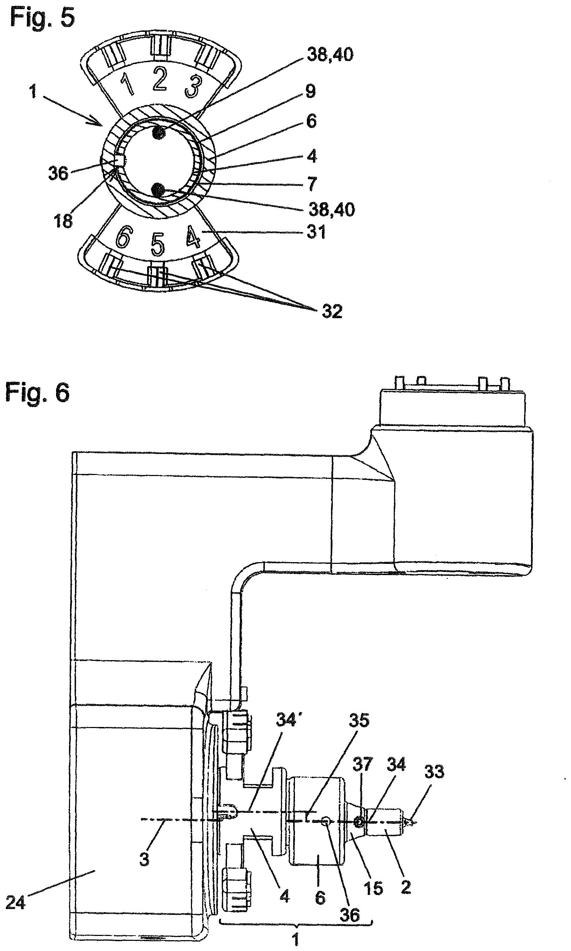

Eine erste Ausführungsform eines aus zwei Werkstückträgerteilen 4 und 6 ausgebildeten Werkstückträgers 1 ist in den Fig. 3 bis 6 dargestellt. Fig. 3 zeigt in einer perspektivischen Explosionsdarstellung den Tragarm 24, die Werkstückträgerteile 4 und 6, das Werkstück 2 sowie das Werkzeug 20. Fig. 4 zeigt ebenfalls in einer Explosionsdarstellung, hier aber in einem Längsschnitt, noch einmal die Werkstückträgerteile 4 und 6 sowie das Werkstück 2 und das Werkzeug 20. Fig. 5 zeigt einen Schnitt in einer normal zur Antriebsrotationsachse 3 liegenden Schnittebene im Bereich des Verdrehsicherungsbauteils 18. Fig. 6 zeigt den Werkstückträger 1 zusammengebaut, nachdem ein Verfahren zur Korrektur der Achslage durchgeführt wurde.

In diesem ersten Ausführungsbeispiel weist der Werkstückträger 1 die zwei Werkstückträgerbauteile 4 und 6 auf. Das Werkstückträgerteil 4 hat einerseits die Befestigungseinrichtung 12, mit der der Werkstückträger 1 an der Antriebswelle 13 befestigt wird. Die Antriebswelle 13 wird von einem im Tragarm 24 angeordneten, hier nicht sichtbaren Drehantrieb um die Antriebsrotationsachse 3 rotiert bzw. gedreht. Der Stift 47 greift in eine entsprechende Aufnahmeausnehmung der Befestigungseinrichtung 12 ein, sodass bei fertig aufgesetzter Befestigungseinrichtung 12 das Werkstückträgerteil 4 mit der Antriebswelle 13 um die Antriebsrotationsachse 3 mit rotiert wird. Natürlich gibt es zahlreiche alternative Möglichkeiten, wie eine Befestigungseinrichtung 12 zur drehfesten Verbindung von Werkstückträgerteil 4 und Antriebswelle 13 ausgebildet sein kann.

Im gezeigten ersten Ausführungsbeispiel weist das Werkstückträgerteil 4 aber auch den Kompensationsbereich 7 mit dem Materialüberstand 8 zur materialabtragenden Einbringung der Ausgleichsfläche 9 auf. Zusätzlich sind in diesem Ausführungsbeispiel am Werkstückträgerteil 4 auch noch der Längsanschlag 16 mit dem Materialüberstand 17 und das Verdrehsicherungsbauteil 18, hier in Form einer Kerbe, mit dem Materialüberstand 19 ausgebildet.

Das Werkstückträgerteil 6 dieses Ausführungsbeispiels weist, wie insbesondere in Fig. 4 gut sichtbar, zusätzlich zum Werkstückadapter 15 auch die Sitzfläche 10 auf. Diese ummantelt den Hohlraum 11, in den der Kompensationsbereich 7 nach Ausbildung der Ausgleichsfläche 9 zur Herstellung der formschlüssigen Verbindung zwischen Sitzfläche 10 und Ausgleichsfläche 9 einführbar ist. Wie eingangs bereits erläutert, ist die Sitzfläche 10 bevorzugt bereichsweise oder vollständig zylindermantelförmig oder anderweitig rotationssymmetrisch ausgeformt.

In den Werkstückadapter 15 wird das Werkstück 2 mit seinem Trägeradapter 39 eingesetzt. Der Trägeradapter 39 und/oder der Werkstückadapter 15 sind bevorzugt so ausgeführt, dass dieses Einsetzen nur in einer einzigen Winkellage bzw. Verdrehstellung um die Werkstückrotationsachse 34 relativ zueinander stattfinden kann. Im gezeigten Ausführungsbeispiel weist der Trägeradapter 39 eine unrunde, in einem seitlichen Bereich abgeflachte Außenkontur auf, welche mittels der Madenschraube 37 und der dafür vorgesehenen Gewindebohrung 51 ausschließlich in einer eindeutigen Lage im Werkstückadapter 15 befestigt werden kann. Auch hier gibt es natürlich zahlreiche alternative Möglichkeiten der Befestigung des Werkstücks 2 am Werkstückadapter 15.

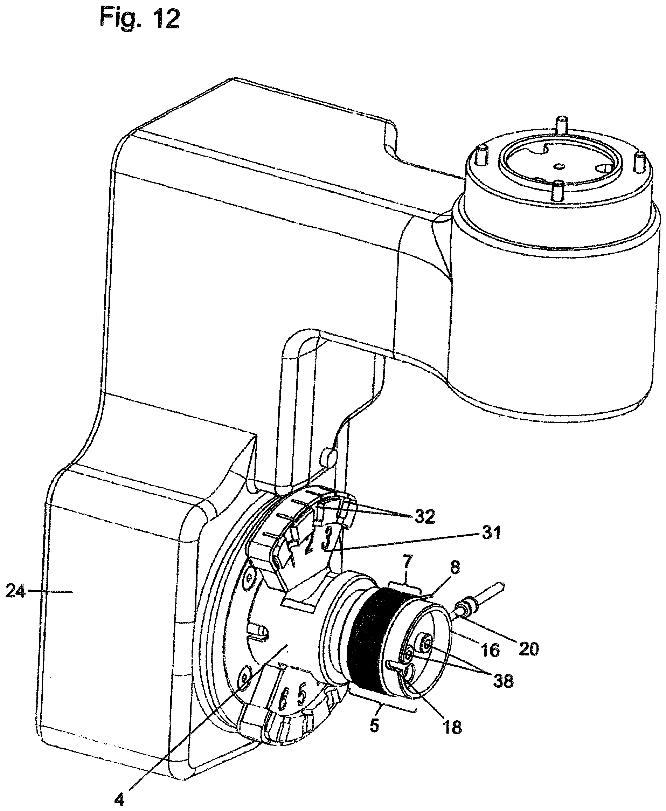

Wie bereits dargelegt, ist der Kompensationsbereich 7 in diesem Ausführungsbeispiel an dem Werkstückträgerteil 4 ausgebildet, welches auch die Befestigungseinrichtung 12 zur Befestigung einer Antriebswelle 13 aufweist. In diesen Kompensationsbereich 7 kann mittels des Werkzeugs 20 durch entsprechende Abtragung des Materialüberstandes 8 die Ausgleichsfläche 9 eingearbeitet werden. Die Ausgleichsfläche 9 wird dabei bevorzugt zumindest bereichsweise zylindermantelförmig oder anderweitig rotationssymmetrisch ausgeformt und zwar günstigerweise so, dass die Symmetrieachse 21 der Form 22 der herzustellenden Ausgleichsfläche 9 koaxial zur Antriebsrotationsachse 3 bzw. auf der Antriebsrotationsachse 3 liegt. Mit dem Verfahren zur Korrektur der Achslage ist in diesem Zusammenhang vorgesehen, dass das Werkstückträgerteil 4 dieses Ausführungsbeispiels mit dem Kompensationsbereich 7 an der um die Antriebsachse 3 rotierbaren Antriebswelle 13 der Bearbeitungsmaschine 14 befestigt wird und anschließend mittels Materialabtrag bei gleichzeitigem Rotieren der Antriebswelle 13 samt Werkstückträgerteil 4 um die Antriebsrotationsachse 3 die Ausgleichsfläche 9 mit dem materialabtragenden Werkzeug 20 der Bearbeitungsmaschine 14 in dem Kompensationsbereich 7 ausgebildet wird. Das Werkstückträgerteil 4 des ersten Ausführungsbeispiels wird hierzu in der Art und Weise mittels der Befestigungseinrichtung 12 an der Antriebswelle 13 befestigt, in der auch der gesamte Werkstückträger 1 bei der späteren Bearbeitung des Werkstücks 2 an der Antriebswelle 13 festgelegt wird. Dies ist für das zweite Ausführungsbeispiel beispielhaft in Fig. 12 gezeigt und wird beim ersten Ausführungsbeispiel ebenso umgesetzt.

Da die Ausgleichsfläche 9 in der Regel, bezüglich des Werkstückträgerteils 4 selbst, etwas exzentrisch im Werkstückträgerteil 4 ausgebildet werden muss, ist der Materialüberstand 8 im Kompensationsbereich 7 vor der materialabtragenden Bearbeitung in der Regel so groß, dass der Durchmesser des Kompensationsbereichs 7 größer als der Innendurchmesser der Sitzfläche 10 ist, sodass vor der Einarbeitung der Ausgleichsfläche 9 der Kompensationsbereich 7 in der Regel nicht in den Hohlraum 11 des Werkstückträgerteils 6 hineinpasst. Das formschlüssige Einführen des Kompensationsbereichs 7 in den von der Sitzfläche 10 umgebenen Hohlraum 11 ist in der Regel erst nach Ausbildung der Ausgleichsfläche 9 möglich. Bei Ausbildung der Ausgleichsfläche 9 wird der Tragarm 24 günstigerweise in seiner Position festgehalten, also insbesondere nicht um die Vertikalachse 25 geschwenkt. Besonders bevorzugte Ausgestaltungsformen sehen in beiden hier gezeigten aber auch in anderen Ausführungsbeispielen vor, dass das Werkzeug 20 zur Ausbildung der Ausgleichsfläche 9 ausschließlich in den Richtungen 28, also parallel zur Antriebsrotationsachse 3 entlang des Kompensationsbereichs 7 bewegt wird, während das Werkstückträgerteil 4 um die Antriebsrotationsachse 3 rotiert. Im Ergebnis dessen wird im Kompensationsbereich 7 erfindungsgemäß eine Ausgleichsfläche 9 in Zylindermantelform ausgebildet, wobei die Symmetrieachse 21 dieser Form 22 des Zylindermantels der Ausgleichsfläche 9 exakt koaxial zur Antriebsrotationsachse 3 ausgebildet wird.

In abweichenden Ausgestaltungsformen ist es auch möglich, das Werkzeug 20 zusätzlich in einer der Richtungen 27 zur Antriebsrotationsachse 3 hin oder von dieser weg zu bewegen, während der Materialabtrag zur Herstellung der Ausgleichsfläche 9 stattfindet. Im Ergebnis dessen ist die Ausgleichsfläche 9 dann z.B. konus- oder kegelförmig. Auch bei diesen anderen rotationssymmetrischen Formen 22 dieser Ausgleichsfläche 9 wird im Ergebnis aber erreicht, dass die Symmetrieachse 21 dieser Form 22 exakt koaxial zur Antriebsrotationsachse 3 liegt.

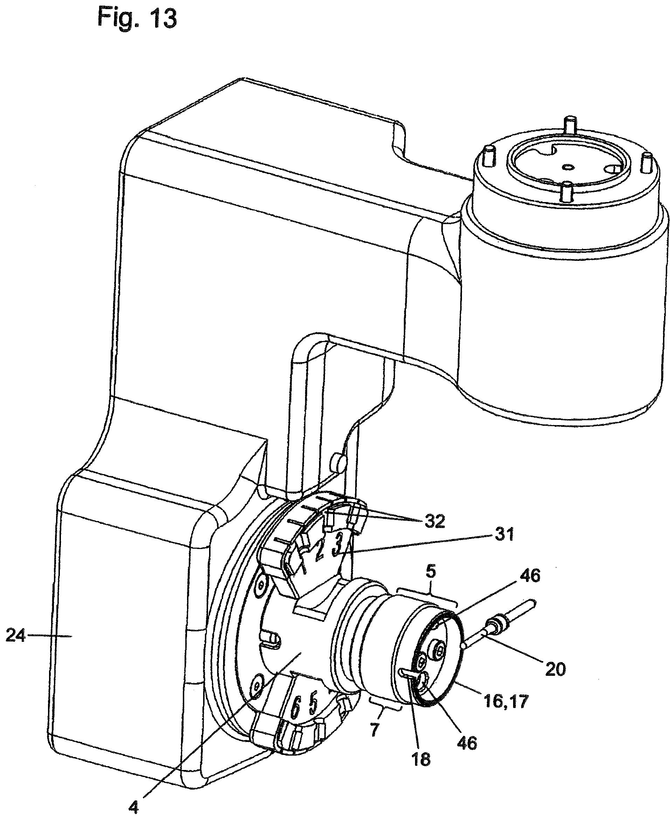

Um das Werkstück 2, bei dessen materialabtragender Bearbeitung in Längsrichtung der Antriebsrotationsachse 3 exakt positionieren zu können, sehen bevorzugte Ausführungsbeispiele, wie hier gezeigt, auch einen Längsanschlag 16 mit einem Materialüberstand 17 vor, wobei der Materialüberstand 17 zur exakten Positionierung des Längsanschlages 16 mittels des Werkzeugs 20 soweit nötig abgetragen werden kann. Mittels der entsprechenden exakten Bearbeitung des Längsanschlags 16 kann die relative Lage zwischen den Werkstückträgerteilen 4 und 6 entlang der Antriebsrotationsachse 3 gesehen, exakt eingestellt werden. Zur materialabtragenden Bearbeitung des Längsanschlages 16 bzw. dessen Materialüberstandes 17, wird das Werkstückträgerteil 4 des ersten Ausführungsbeispiels wieder entsprechend an der Antriebswelle 13 befestigt und mittels des Werkzeugs 20 bearbeitet, wie dies analog für das zweite Ausführungsbeispiel in Fig. 13 explizit gezeigt ist.

Falls dies notwendig ist, kann auch noch eine Verdrehsicherung zwischen den Werkstückträgerteilen 4 und 6 vorgesehen sein. Im hier gezeigten ersten Ausführungsbeispiel ist für diese Verdrehsicherung im Werkstückträgerteil 4 ein Verdrehsicherungsbauteil 18 in Form eines Schlitzes mit einem Materialüberstand 19 vorgesehen. Auch dieser Materialüberstand 19 kann mittels des Werkzeuges 20 so bearbeitet werden, dass die Werkstückträgerteile 4 und 6 in einer einzigen Winkelposition relativ zueinander, also nicht um die Antriebsrotationsachse 3 gegeneinander verdreht miteinander verbunden werden können. Im gezeigten Ausführungsbeispiel ist hierfür ein Indexstift 36 vorgesehen, welcher durch die entsprechende Indexöffnung 48 im Werkstückträgerteil 6 in das fertig ausgeformte Verdrehsicherungsbauteil 18 eingeführt wird und so, wie in Fig. 5 besonders gut zu sehen, dafür sorgt, dass die Werkstückträgerteile 4 und 6 nur in einer einzigen Winkelstellung und nicht relativ zueinander um die Antriebsrotationsachse 3 verdreht aneinander befestigt werden. Der Vollständigkeit halber wird darauf hingewiesen, dass das Verdrehsicherungsbauteil 18 natürlich nicht zwingend als ein Schlitz mit einem entsprechenden Materialüberstand 19 ausgebildet sein muss. Bei dem Verdrehsicherungsbauteil 18 mit entsprechendem Materialüberstand 19 könnte es sich z.B. auch um einen Vorsprung oder eine sonstige geeignete geometrische Ausgestaltung handeln.

Nach Herstellung der Ausgleichsfläche 9 durch Materialabtrag am Materialüberstand 8 im Kompensationsbereich 7 und gegebenenfalls nach entsprechender Bearbeitung des Längsanschlags 16 und des Verdrehsicherungsbauteils 18 können die Werkstückträgerteile 4 und 6 formschlüssig und in einer eindeutigen Position zusammengefügt werden. Hierbei kommt es zum Formschluss zwischen Ausgleichsfläche 9 und Sitzfläche 10, sowie soweit vorhanden auch zum Formschluss zwischen Längsanschlag 16 und entsprechendem Gegenanschlag 49 am Werkstückträgerteil 6. Gegebenenfalls kann auch der Indexstift 36 formschlüssig in das entsprechend bearbeitete Verdrehsicherungsbauteil 18 eingreifen. Im gezeigten Ausführungsbeispiel sind zur Verbindung der beiden Werkstückträgerteile 4 und 6 miteinander noch Schrauben 38 vorgesehen, welche durch Durchtrittsöffnungen 46 im Werkstückträgerteil 6 hindurchgeführt und in die Schraubenlöcher 40 im Werkstückträgerteil 4 eingeschraubt werden. Die Schrauben 38 und die sie aufnehmenden Schraubenkopfausnehmungen 50 sind so ausgebildet, dass mittels der Schrauben 38 ausschließlich eine Zugspannung in Richtung der Antriebsrotationsachse 3 ausgeübt wird. Die Ausrichtung der beiden Werkstückträgerteile 4 und 6 aneinander erfolgt ausschließlich über den Formschluss zwischen Ausgleichsfläche 9 und Sitzfläche 10 und soweit vorhanden über den Längsanschlag 16 und/oder das Verdrehsicherungsbauteil 18.

Fig. 6 zeigt nun den im Anschluss an die durchgeführte Korrektur der Achslage fertiggestellten Werkstückträger 1, bei dem die Werkstückträgerteile 4 und 6 zusammengefügt sind und im Werkstückadapter 15 das zu bearbeitende Werkstück 2 befestigt ist. Werkstückträger 1 und Werkstück 2 sind in Fig. 6 an der Antriebswelle 13 befestigt. Dies ist die Stellung, in der nun das Werkstück 2 materialabtragend mittels des Werkzeugs 20 bearbeitet werden kann. In Fig. 6 sind die Antriebsrotationsachse 3 und die Werkstückrotationsachse 34 in ihrer Lage nach der Korrektur der Achslage eingezeichnet. Die Werkstückrotationsachse 34 liegt nun wunschgemäß koaxial zur bzw. auf der Antriebsrotationsachse 3. Eingezeichnet sind auch noch die Werkstückrotationsachse 34' in ihrer Lage gemäß Fig. 2, also vor der Korrektur der Achslage, sowie der nun korrigierte Versatz 35. Diese Korrektur der Achslage bzw. des Versatzes 35 ist äußerlich auch an der leicht exzentrischen, hier in Vertikalrichtung verschobenen Lage zwischen Werkstückträgerteil 4 und Werkstückträgerteil 6 zu erkennen. Durch die nun exakt koaxiale Ausrichtung der Symmetrieachse des Werkstückes 2, also der Werkstückrotationsachse 34 zur Antriebsrotationsachse 3 kann nun das Werkstück 2 sehr exakt mittels Rotationsbearbeitung bearbeitet werden.

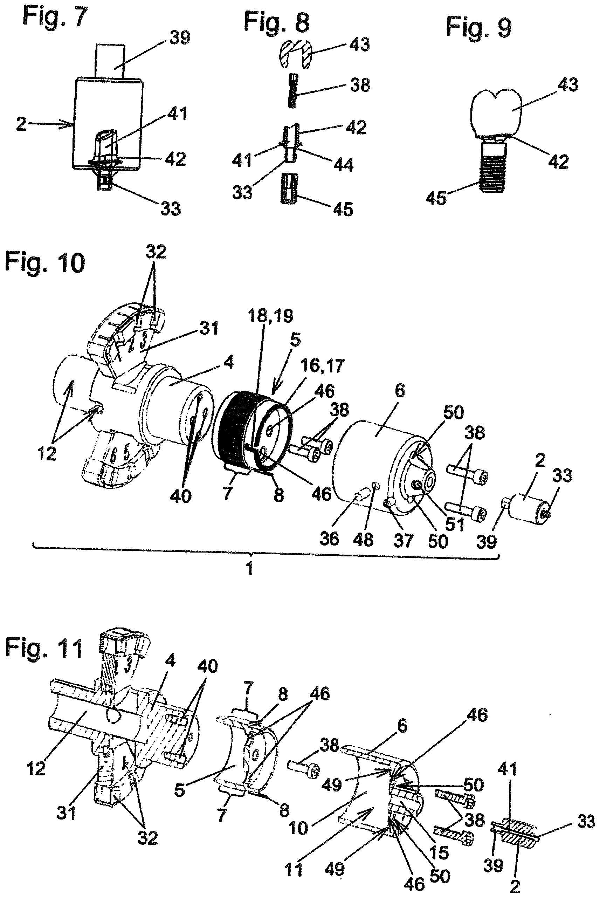

Die Fig. 7 bis 9 zeigen beispielhaft ein Bauteil, welches aus dem Werkstück 2 herausgearbeitet werden kann. Im vorliegenden Fall handelt es sich um ein Abutment 42. Dieses wird mit der Anschlussgeometrie 33 in ein Implantat 45 eingeschoben. Das Implantat 45 ist, wie an sich bekannt, in den Kieferknochen des Patienten implantiert bzw. zu implantieren. Über die Außenform der Anschlussgeometrie 33 wird in bevorzugten Ausgestaltungsformen sichergestellt, dass es zu keinem verdrehten Einbau oder Verdrehen des aus dem Werkstück 2 hergestellten Abutments 42 bei der Befestigung im Implantat 45 kommt. Zusätzlich wird das Abutment 42 mittels der Schraube 38 im Implantat 45 festgeschraubt.

Hierzu dient der Längskanal 41, welcher im vorliegenden Ausführungsbeispiel bereits im unbearbeiteten Werkstück 2 bzw. Rohling vorhanden ist. Dies geht auch aus den Fig. 4 zum ersten Ausführungsbeispiel und 11 zum zweiten Ausführungsbeispiel hervor. Die Schulter 44 im Längskanal 41 dient als Widerlager für den Kopf der Schraube 38. Auf das so am Implantat 45 befestigte Abutment 42 kann eine Krone 43 aufgesetzt werden. Fig. 9 zeigt die Krone 43, das Abutment 42 und das Implantat 45 im zusammengebauten Zustand. In Fig. 7 ist der noch nicht bearbeitete Rohling, also das ursprünglich vorliegende Werkstück 2 durchscheinend dargestellt, sodass man das durch Materialabtrag herauszuarbeitende Abutment 42 sieht. Der Vollständigkeit halber wird darauf hingewiesen, dass der Längskanal 41 optional ist und das Abutment 42 wie hier als ein Kronenträger aber auch als Krone selbst ausgeführt sein kann. Ist es eine Krone so kann der Längskanal 41 durch an sich bekanntes Füllmaterial geschlossen werden.

Die Fig. 10 bis 15 zeigen ein zweites Ausführungsbeispiel eines Werkstückträgers sowie Darstellungen zur Korrektur der Achslage. In diesem zweiten Ausführungsbeispiel weist der Werkstückträger 1 drei Werkstückträgerteile 4, 5 und 6 auf, wie sie in den Explosionsdarstellungen gemäß Fig. 10 und 11 gut sichtbar sind. Sowohl der Kompensationsbereich 7 mit dem Materialüberstand 8 als auch der Längsanschlag 16 mit dem Materialüberstand 17 und das Verdrehsicherungsbauteil 18 mit dem Materialüberstand 19 sind hier an dem zwischen den zwei anderen Werkzeugträgerteilen 4 und 6 angeordneten mittleren Werkstückträgerteil 5 ausgebildet. Dies hat den Vorteil, dass dieses mittlere Werkstückträgerteil 5 aus einem weicheren Material ausgebildet werden kann, was den Materialabtrag an den Materialüberständen 8, 17 und 19 vereinfacht. Das Werkstückträgerteil 6 mit dem Hohlraum 11 und der Sitzfläche 10 sowie dem Werkstückadapter 15 ist wie beim ersten Ausführungsbeispiel ausgeführt, sodass diesbezüglich auf die obige Beschreibung genauso verwiesen werden kann, wie auch bezüglich der Frage, wie das Werkstück 2 am Werkstückadapter 15 und damit am Werkstückträgerteil 6 befestigt wird. Das Werkstückträgerteil 4 weist wie im ersten Ausführungsbeispiel die Befestigungseinrichtung 12 zur Befestigung des Werkstückträgers 1 an der Antriebswelle 13 und den wiederum optional vorhandenen Werkzeughalter 31 auf. Auch diesbezüglich kann auf die Beschreibung des ersten Ausführungsbeispiels verwiesen werden. Die Befestigung des hier hülsenartig ausgebildeten mittleren Werkstückträgerteils 5 am Werkstückträgerteil 4 erfolgt mittels zweier Schrauben 38, welche durch die Durchtrittsöffnung 46 im mittleren Werkstückträgerteil 5 hindurchgeführt und in den entsprechenden Schraubenlöchern 40 im Werkstückträgerteil 4 festgeschraubt werden. Auch das Aufspannen des Werkstückträgerteils 6 auf die miteinander verbundenen Werkstückträgerteile 4 und 5 mittels der Schrauben 38 und der entsprechenden Schraubenlöcher 40 im Werkstückträgerteil 4 erfolgt wie im ersten Ausführungsbeispiel. Auch hier wird die Ausrichtung über das Zusammenspiel von Ausgleichsfläche 9, Sitzfläche 10, Längsanschlag 16 und Gegenanschlag 49, sowie Verdrehsicherungsbauteil 18 und Indexstift 36 sichergestellt. Die Schrauben 38 dienen lediglich dem Aufspannen in Längsrichtung der Antriebsrotationsachse 3.

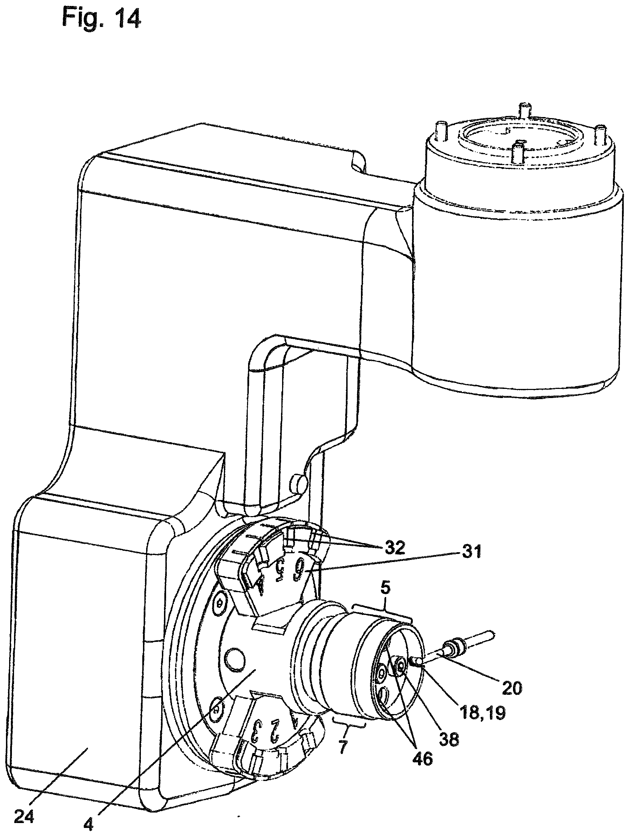

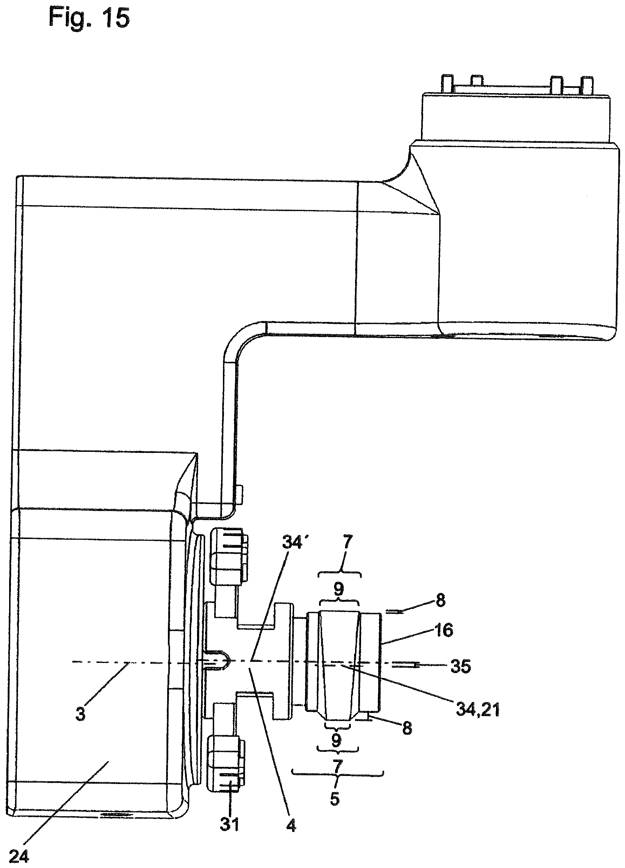

Für die Durchführung der Korrektur der Achslage werden die Werkstückträgerteile 4 und 5, wie in Fig. 12 gezeigt, an der Antriebswelle 13 in der Art und Weise befestigt, wie sie auch bei der späteren Bearbeitung des Werkstücks 2 dort befestigt sind. Allerdings wird während der Korrektur der Achslage das Werkstückträgerteil 6 noch weggelassen. Der Materialabtrag im Kompensationsbereich 7 mittels des Werkzeugs 20 erfolgt wie im ersten Ausführungsbeispiel und dort auch geschildert. Im Ergebnis wird eine Ausgleichsfläche 9 herausgearbeitet, wie sie beispielhaft in Fig. 15 gezeigt und weiter unten noch erläutert ist. Fig. 13 zeigt den Materialabtrag am Materialüberstand 17 des Längsanschlags 16. Wie bei der Bearbeitung des Kompensationsbereichs 7 werden hierzu Werkstückträgerteil 4 und Werkstückträgerteil 5 gemeinsam um die Antriebsrotationsachse 3 gedreht, während das Werkzeug 20 nach und nach bei gleichzeitigem Materialabtrag auf eine vorbestimmte Position entlang der Antriebsrotationsachse 3, also in eine der Richtungen 28 gefahren wird. Hierdurch kann sehr exakt die Länge des dann zusammengebauten Werkstückträgers 1 und damit die Position des Werkstücks 2 am dann zusammengebauten Werkstückträger 1 entlang der Antriebsrotationsachse 3 eingestellt werden. Die materialabtragende Bearbeitung des Materialüberstands 19 am hier wiederum als Schlitz ausgebildeten Verdrehsicherungsbauteil 18 ist in Fig. 14 gezeigt. Auch diese Bearbeitung erfolgt mittels des Werkzeugs 20. Hierdurch kann sehr genau die Winkellage des Werkstückteils 6 um die Antriebsrotationsachse 3 und damit des Werkstücks 2 relativ zur Antriebswelle 13 eingestellt werden.

Fig. 15 zeigt in einer Seitenansicht die durch die Korrektur der Achslage herausgearbeitete Ausgleichsfläche 9. In der hier dargestellten Stellung ist gut zu sehen, dass im Kompensationsbereich 7 am oberen Ende des Werkstückträgerteils 5 mehr Material abgetragen wurde, als am unteren Ende des Kompensationsbereichs 7. Der verbliebene Materialüberstand 8 ist somit oben deutlich geringer als unten. Hierdurch wird erreicht, dass die Symmetrieachse 21 der herausgearbeiteten Form 22 der hier zylindermantelförmig herausgearbeiteten Ausgleichsfläche 9 exakt koaxial zur Antriebsrotationsachse 3 liegt. Zum Vergleich eingezeichnet ist noch einmal die Werkstückrotationsachse 34' vor der Korrektur mittels materialabtragender Bearbeitung des Kompensationsbereichs 7. Gut zu sehen ist hier der nun beseitigte Versatz 35.

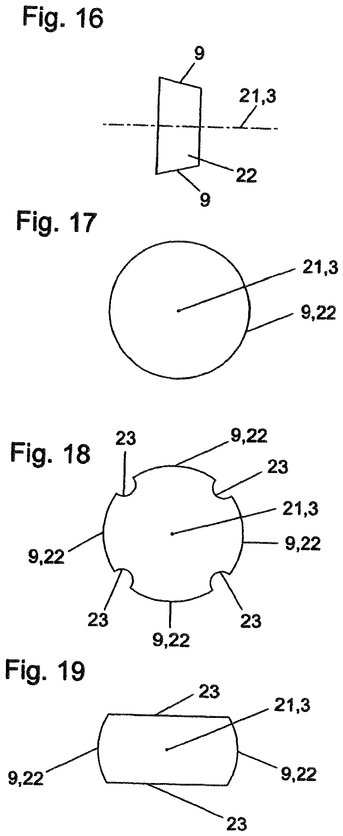

Fig. 16 zeigt schematisiert als ein Beispiel, dass die Form 22 der Ausgleichsfläche 9 nicht zwingend zylindermantelförmig sein muss sondern auch anderweitig rotationssymmetrisch bezüglich der Symmetrieachse 21 und damit im Ergebnis der Antriebsrotationsachse 3 ausgebildet sein kann. In Fig. 16 bildet die Ausgleichsfläche 9 einen Kegelstumpf.

Fig. 17 zeigt schematisiert einen Schnitt entlang einer Schnittebene normal zur Antriebsrotationsachse 3 bzw. Symmetrieachse 21 durch eine vollständig zylindermantelförmig herausgearbeitete Ausgleichsfläche 9. In diesem Fall bildet die Ausgleichsfläche 9 in diesem Schnitt einen exakten Kreis mit dem Kreismittelpunkt auf der Antriebsrotationsachse 3. Wie eingangs erwähnt, ist es aber nicht zwingend notwendig, dass die Ausgleichsfläche 9 vollständig rotationssymmetrisch oder zylindermantelförmig ausgebildet sein muss. Die Fig. 18 und 19 zeigen Beispiele hierfür. Dargestellt ist jeweils wiederum ein Schnitt durch eine fertig herausgearbeitete Ausgleichsfläche 9 in einer Schnittebene, welche normal auf der Antriebsrotationsachse 3 steht. Beide Varianten gemäß der Fig. 18 und 19 weisen Oberflächenbereiche 23 auf, welche von der zylindermantelförmigen oder anderweitig rotationssymmetrischen Form 22 abweichen. Bevorzugt ist aber in solchen Fällen, wie eingangs bereits erläutert, vorgesehen, dass die von der zylindermantelförmigen oder anderweitig rotationssymmetrischen Form 22 abweichenden Oberflächen 23 im Kompensationsbereich 7 näher an der Symmetrieachse 21 und damit an der Antriebsrotationsachse 3 liegen, als die zylindermantelförmige oder anderweitig rotationssymmetrisch ausgebildete Form 22 der Ausgleichsfläche 9.

Zu den bisher gezeigten Ausführungsbeispielen sei darauf hingewiesen, dass zusätzlich zum Formschluss die Ausgleichsfläche 9 und die Sitzfläche 10 natürlich auch noch anderweitig, vorzugsweise formschlüssig wie durch Verschweißen oder Verkleben miteinander verbunden werden können.

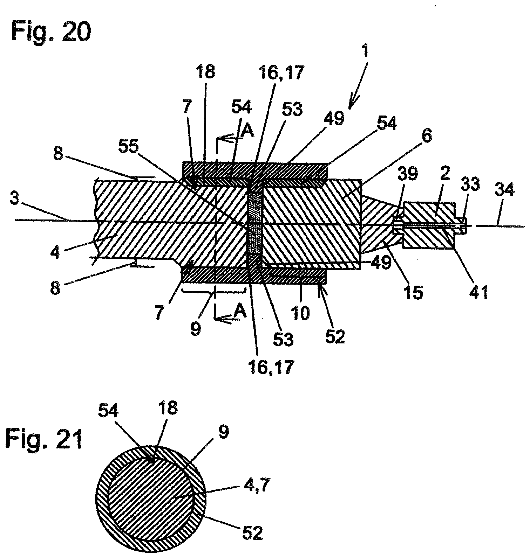

Fig. 20 und 21 zeigen nun ein Beispiel, beim dem der Formschluss zwischen Ausgleichsfläche 9 und Sitzfläche 10 nur der exakten Ausrichtung dient, um die so ausgerichteten Werkstückträgerteile 4 und 6 dann, z.B. stoffschlüssig, miteinander zu verbinden. Fig. 20 zeigt einen Längsschnitt, Fig. 21 den Querschnitt entlang der Schnittlinie AA. Die formschlüssige Verbindung zwischen Ausgleichsfläche 9 und Sitzfläche 10 erfolgt hier in diesem Ausführungsbeispiel über formschlüssiges Einschieben dieser beiden Flächen 9 und 10 in den hier hülsenartig ausgebildeten Verbindungsadapter 52. Dieser sorgt für eine exakte Ausrichtung, in der die Werkstückträgerteile 4 und 6 dann zum Beispiel mittels Verklebung 55 oder Verschweißung miteinander dauerhaft verbunden werden, sodass der Verbindungsadapter 52 und damit der Formschluss dann wieder entfernt werden kann. Der Verbindungsadapter 52 kann mehrteilig bzw. zerlegbar und zusammenbaubar ausgeführt sein oder zum Entfernen im Sinne eines Einwegproduktes auch zerstört werden. Das Einfüllen des Klebstoffes für die Verklebung 55 kann über eine hier nicht dargestellte Öffnung im Verbindungsadapter 52 erfolgen.

Günstigerweise weist der Verbindungsadapter 52, wie hier gezeigt, auch einen Anschlagring 53 zur Sicherstellung der exakten Ausrichtung der Werkstückträgerteile in axialer Richtung und/oder zur Verdrehsicherung eine Indexsteg 54 auf.

Das Verdrehsicherungsbauteil 18 am Werkstückträgerteil 4 ist korrespondierend zum Indexsteg 54 hier als Längsnut ausgebildet. Die materialabtragende Bearbeitung zur Herausbildung der Ausgleichsfläche 9, des Längsanschlags 16 und des hier nutförmigen Verdrehsicherungsbauteils 18 des Werkstückträgerteils 4 erfolgt analog wie bei den vorab geschilderten Ausführungsbeispielen. Die Sitzfläche 10 des Werkstückträgerteils 6 ist hier in Form eines zylinderförmigen Zapfens mit einer Längsnut zur Aufnahme des Indexsteges 54 ausgebildet, was natürlich nur eine von vielen Möglichkeiten der Ausgestaltung darstellt.

### Legende zu den Hinweisziffern:

- 1,1 ': Werkstückträger
- 2: Werkstück
- 3: Antriebsrotationsachse
- 4: Werkstückträgerteil
- 5: Werkstückträgerteil
- 6: Werkstückträgerteil
- 7: Kompensationsbereich
- 8: Materialüberstand
- 9: Ausgleichsfläche
- 10: Sitzfläche
- 11: Hohlraum
- 12: Befestigungseinrichtung
- 13: Antriebswelle
- 14: Bearbeitungsmaschine
- 15: Werkstückadapter
- 16: Längsanschlag
- 17: Materialüberstand
- 18: Verdrehsicherungsbauteil
- 19: Materialüberstand
- 20: Werkzeug
- 21: Symmetrieachse
- 22: Form
- 23: Oberflächenbereich
- 24: Tragarm
- 25: Vertikalachse
- 26: Werkzeugträgerkopf
- 27: Richtung
- 28: Richtung
- 29: Richtung
- 30: Werkzeugrotationsrichtung
- 31: Werkzeughalter
- 32: Werkzeugaufnahme
- 33: Anschlussgeometrie
- 34, 34': Werkstückrotationsachse
- 35: Versatz
- 36: Indexstift
- 37: Madenschraube
- 38: Schraube
- 39: Trägeradapter
- 40: Schraubenlöcher
- 41: Längskanal
- 42: Kronenträger
- 43: Krone
- 44: Schulter
- 45: Implantat
- 46: Durchtrittsöffnung
- 47: Stift
- 48: Indexöffnung
- 49: Gegenanschlag
- 50: Schraubenkopfausnehmung
- 51: Gewindebohrung
- 52: Verbindungsadapter
- 53: Anschlagring
- 54: Indexsteg
- 55: Verklebung

## Patentansprüche

1. Verwendung eines Werkstückträgerteils (6) in einem Verfahren zur Korrektur der Achslage eines Werkstückträgers (1) und in einem Verfahren zur materialabtragenden Bearbeitung eines dentalen Werkstücks (2) in einer den Werkstückträger (1) aufweisenden Bearbeitungsmaschine (14), wobei das Werkstückträgerteil (6) eine Sitzfläche (10) aufweist, wobei das Werkstück (2) vom Werkstückträger (1) gehalten und während der materialabtragenden Bearbeitung gemeinsam mit dem Werkstückträger (1) um eine Antriebsrotationsachse (3) der Bearbeitungsmaschine (14) rotiert wird, und wobei der Werkstückträger (1) zumindest ein weiteres, mit dem Werkstückträgerteil (6) verbindbares und von diesem trennbares zweites Werkstückträgerteil (4, 5) aufweist, das zumindest einen Kompensationsbereich (7) mit einem Materialüberstand (8) zur materialabtragenden Einbringung einer Ausgleichsfläche (9) aufweist, **dadurch gekennzeichnet, dass** in dem Verfahren zur Korrektur der Achslage das zweite Werkstückträgerteil (4, 5) mit dem Kompensationsbereich (7) an einer, um die Antriebsrotationsachse (3) rotierbaren Antriebswelle (13) der Bearbeitungsmaschine (14) befestigt wird, anschließend mittels Materialabtragung bei gleichzeitigem Rotieren der Antriebswelle (13) samt zweitem Werkstückträgerteil (4, 5) um die Antriebsrotationsachse (3) die Ausgleichsfläche (9) mit einem materialabtragenden Werkzeug (20) der Bearbeitungsmaschine (14) in dem Kompensationsbereich (7) ausgebildet wird, und die Sitzfläche (10) des Werkstückträgerteils (6) mit der Ausgleichsfläche (9) des zweiten Werkstückträgerteils (4, 5) formschlüssig verbunden wird.

2. Verwendung nach Anspruch 1, **dadurch gekennzeichnet, dass** die Sitzfläche (10) einen Hohlraum (11) ummantelt und die Ausgleichsfläche (9) in den Hohlraum (11) beim formschlüssigen Verbinden der Sitzfläche (10) mit der Ausgleichsfläche (9) eingeführt wird.

3. Verwendung nach Anspruch 1 oder 2, **dadurch gekennzeichnet, dass** die Sitzfläche (10) bereichsweise oder vollständig zylindermantelförmig oder anderweitig rotationssymmetrisch ausgeformt ist.

4. Verwendung nach einem der Ansprüche 1 bis 3, **dadurch gekennzeichnet, dass** das Werkstückträgerteil (6) einen Werkstückadapter (15) zur Befestigung des Werkstücks (2) am Werkstückträger (1) aufweist.

5. Verwendung eines Werkstückträgerteils (4, 5) in einem Verfahren zur Korrektur der Achslage eines Werkstückträgers (1) und in einem Verfahren zur materialabtragenden Bearbeitung eines dentalen Werkstücks (2) in einer den Werkstückträger (1) aufweisenden Bearbeitungsmaschine (14), wobei das Werkstück (2) vom Werkstückträger (1) gehalten und während der materialabtragenden Bearbeitung gemeinsam mit dem Werkstückträger (1) um eine Antriebsrotationsachse (3) der Bearbeitungsmaschine (14) rotiert wird, und wobei der Werkstückträger (1) zumindest ein weiteres, mit dem Werkstückträgerteil (4, 5) verbindbares und von diesem trennbares zweites Werkstückträgerteil (6) aufweist, **dadurch gekennzeichnet, dass** das Werkstückträgerteil (4, 5) zumindest einen Kompensationsbereich (7) mit einem Materialüberstand (8) zur materialabtragenden Einbringung einer Ausgleichsfläche (9) aufweist und in dem Verfahren zur Korrektur der Achslage das Werkstückträgerteil (4, 5) mit dem Kompensationsbereich (7) an einer, um die Antriebsrotationsachse (3) rotierbaren Antriebswelle (13) der Bearbeitungsmaschine (14) befestigt wird und anschließend mittels Materialabtragung bei gleichzeitigem Rotieren der Antriebswelle (13) samt Werkstückträgerteil (4, 5) um die Antriebsrotationsachse (3) die Ausgleichsfläche (9) mit einem materialabtragenden Werkzeug (20) der Bearbeitungsmaschine (14) in dem Kompensationsbereich (7) ausgebildet wird.

6. Verwendung nach Anspruch 5, **dadurch gekennzeichnet, dass** in dem Verfahren die Ausgleichsfläche (9) bereichsweise oder vollständig zylindermantelförmig oder anderweitig rotationssymmetrisch ausgebildet wird, wobei eine Symmetrieachse (21) der ausgebildeten zylindermantelförmigen oder anderweitig rotationssymmetrischen Form (22) der Ausgleichsfläche (9) koaxial zur Antriebsrotationsachse (3) liegt.

7. Verwendung nach Anspruch 6, **dadurch gekennzeichnet, dass** nach dem Durchführen des Verfahrens gegebenenfalls vorhandene, von der zylindermantelförmigen oder anderweitig rotationssymmetrischen Form (22) abweichende Oberflächenbereiche (23) im Kompensationsbereich (7) näher an der Symmetrieachse (21) liegen als die zylindermantelförmige oder anderweitig rotationssymmetrische Form (22) der Ausgleichsfläche (9).

8. Verwendung nach einem der Ansprüche 5 bis 7 für einen Werkstückträger (1), der zumindest drei Werkstückträgerteile (4, 5, 6) aufweist, **dadurch gekennzeichnet, dass** das Werkstückträgerteil (5) mit der Ausgleichsfläche (9) zwischen zwei der anderen Werkstückträgerteile (4, 6) angeordnet wird.

## Claims

1. Use of a workpiece support part (6) in a method for correcting the axial position of a workpiece support (1) and in a method for material-removing machining of a dental workpiece (2) in a processing machine (14) comprising the workpiece support (1), wherein the workpiece support part (6) has a seating surface (10), wherein the workpiece (2) is held by the workpiece support (1) and is rotated together with the workpiece support (1) about a drive rotation axis (3) of the processing machine (14) during the material-removing machining, and wherein the workpiece support (1) has at least one further second workpiece support part (4, 5), which can be connected to the workpiece support part (6) and separated therefrom, and which has at least one compensation region (7) with a material projection (8) for introducing of a compensation surface (9) by material-removing machining,
**characterized in that,** in the process for correcting the axial position, the second workpiece support part (4, 5) with the compensation region (7) is fastened to a drive shaft (13) of the processing machine (14), wherein the drive shaft (13) can be rotated about the drive rotation axis (3), subsequently, by means of material removal with simultaneous rotation of the drive shaft (13) together with the second workpiece support part (4, 5) about the drive rotation axis (3), the compensation surface (9) is configured with a material-removing tool (20) of the processing machine (14) in the compensation region (7), and the seating surface (10) of the workpiece support part (6) is positively connected to the compensation surface (9) of the second workpiece support part (4, 5).

2. Use according to claim 1, **characterized in that** the seating surface (10) encloses a cavity (11) and the compensation surface (9) is introduced into the cavity (11) when the seating surface (10) is positively connected to the compensation surface (9).

3. Use according to claims 1 or 2, **characterized in that** the seating surface (10) is partly or completely shaped in the form of a cylinder-jacket in or is otherwise formed rotation-symmetrically.

4. Use according to one of the claims 1 to 3, **characterized in that** the workpiece support part (6) has a workpiece adapter (15) for fastening the workpiece (2) to the workpiece support (1).

5. Use of a workpiece support part (4, 5) in a method for correcting the axial position of a workpiece support (1) and in a method for material-removing machining of a dental workpiece (2) in a processing machine (14) comprising the workpiece support (1), the workpiece (2) being held by the workpiece support (1) and is rotated together with the workpiece support (1) about a drive rotation axis (3) of the processing machine (14) during the material-removing machining, and wherein the workpiece support (1) having at least one further second workpiece support part (6) which can be connected to the workpiece support part (4, 5) and can be separated therefrom, **characterized in that** the workpiece support part (4, 5) has at least one compensation region (7) with a material projection (8) for introducing of a compensation surface (9) by material-removing machining, and wherein in the method for correcting the axial position the workpiece support part (4, 5) with the compensation region (7) the workpiece support part (4, 5) can be connected to a drive shaft (13) of the processing machine (14), which drive shaft (13) is rotatable about the drive axis of rotation (3), and subsequently the compensation surface (9) is configured in the compensation region (7) by means of material removal by a material-removing tool (20) of the processing machine (14) with simultaneous rotation of the drive shaft (13) together with the workpiece support part (4, 5) about the drive axis of rotation (3).

6. Use according to claim 5, **characterized in that** in the method the compensation surface (9) is partly or completely formed in the shape of a cylinder-jacket or otherwise formed rotation-symmetrically, wherein an axis of symmetry (21) of the cylinder-jacket or otherwise rotation-symmetrically formed shape (22) of the compensation surface (9) is coaxially with the drive rotation axis (3).

7. Use according to claim 6, **characterized in that,** after the method has been carried out, any surface regions (23) in the compensation region (7) which deviate from the cylinder-jacket or otherwise rotation-symmetrically formed shape (22), are closer to the axis of symmetry (21) than the cylinder-jacket or otherwise rotation-symmetrically formed shape (22) of the compensation surface (9).

8. Use according to one of the claims 5 to 7 for a workpiece support (1) which has at least three workpiece support parts (4, 5, 6), **characterized in that** the workpiece support part (5) with the compensation surface (9) is positioned between two of the other workpiece support parts (4, 6).

## Revendications

1. Utilisation d'une partie porte-pièce (6) dans un procédé de correction de la position axiale d'un porte-pièce (1) et dans un procédé d'usinage par enlèvement de matière d'une pièce dentaire (2) dans une machine d'usinage (14) comportant le porte-pièce (1), dans laquelle la partie porte-pièce (6) comporte une surface d'assise (10), dans laquelle la pièce (2) est maintenue par le porte-pièce (1) et tourne conjointement avec le porte-pièce (1) autour d'un axe de rotation d'entraînement (3) de la machine d'usinage (14) pendant l'usinage par enlèvement de matière, et dans laquelle le porte-pièce (1) comporte au moins une deuxième partie porte-pièce (4, 5) supplémentaire qui peut être connectée à et déconnectée de la partie porte-pièce (6) et qui comporte au moins une zone de compensation (7) avec un débord de matière (8) pour la constitution par enlèvement de matière d'une surface d'ajustement (9), **caractérisée en ce que** dans le procédé de correction de la position axiale, la deuxième partie porte-pièce (4, 5) est montée avec la zone de compensation (7) sur un arbre d'entraînement (13) de la machine d'usinage (14) tournant autour de l'axe de rotation d'entraînement (3), la surface d'ajustement (9) est ensuite formée dans la zone de compensation (7) par enlèvement de matière avec un outil d'enlèvement de matière (20) de la machine d'usinage (14) tandis que l'arbre d'entraînement (13) tourne conjointement avec la deuxième partie porte-pièce (4, 5) autour de l'axe de rotation d'entraînement (3), et la surface d'assise (10) de la partie porte-pièce (6) est couplée par engagement de forme avec la surface d'ajustement (9) de la deuxième partie porte-pièce (4, 5).

2. Utilisation selon la revendication 1, **caractérisée en ce que** la surface d'assise (10) entoure une cavité (11) et la surface d'ajustement (9) est introduite dans la cavité (11) lorsque la surface d'assise (10) est couplée par engagement de forme avec la surface d'ajustement (9).

3. Utilisation selon la revendication 1 ou 2, **caractérisée en ce que** la surface d'assise (10) est partiellement ou totalement conformée comme une enveloppe cylindrique ou est autrement symétrique en rotation.

4. Utilisation selon l'une des revendications 1 à 3, **caractérisée en ce que** la partie porte-pièce (6) comporte un adaptateur de pièce (15) pour la fixation de la pièce (2) sur le porte-pièce (1).

5. Utilisation d'une partie porte-pièce (4, 5) dans un procédé de correction de la position axiale d'un porte-pièce (1) et dans un procédé d'usinage par enlèvement de matière d'une pièce dentaire (2) dans une machine d'usinage (14) comportant le porte-pièce (1), dans laquelle la pièce (2) est maintenue par le porte-pièce (1) et tourne conjointement avec le porte-pièce (1) autour d'un axe de rotation d'entraînement (3) de la machine d'usinage (14) pendant l'usinage par enlèvement de matière, et dans laquelle le porte-pièce (1) comporte au moins une deuxième partie porte-pièce (6) supplémentaire qui peut être connectée à et déconnectée de la partie porte-pièce (4, 5), **caractérisée en ce que** la partie porte-pièce (4, 5) comporte au moins une zone de compensation (7) avec un débord de matière (8) pour la constitution par enlèvement de matière d'une surface d'ajustement (9), et dans le procédé de correction de la position axiale, la partie porte-pièce (4, 5) est montée avec la zone de compensation (7) sur un arbre d'entraînement (13) de la machine d'usinage (14) tournant autour de l'axe de rotation d'entraînement (3), et la surface d'ajustement (9) est ensuite formée dans la zone de compensation (7) par enlèvement de matière avec un outil d'enlèvement de matière (20) de la machine d'usinage (14) tandis que l'arbre d'entraînement (13) tourne conjointement avec la partie porte-pièce (4, 5) autour de l'axe de rotation d'entraînement (3) .

6. Utilisation selon la revendication 5, **caractérisée en ce que** dans le procédé, la surface d'ajustement (9) est partiellement ou totalement conformée comme une enveloppe cylindrique ou est autrement symétrique en rotation, dans laquelle un axe de symétrie (21) de la forme d'enveloppe cylindrique ou autrement symétrique en rotation (22) conformée de la surface d'ajustement (9) est coaxiale à l'axe de rotation d'entraînement (3).

7. Utilisation selon la revendication 6, **caractérisée en ce qu'**après la mise en œuvre du procédé, les éventuelles surfaces (23) dans la zone de compensation (7) qui divergent de la forme d'enveloppe cylindrique ou autrement symétrique en rotation (22) sont plus proches de l'axe de symétrie (21) que la forme d'enveloppe cylindrique ou autrement symétrique en rotation (22) de la surface d'ajustement (9).

8. Utilisation selon l'une des revendications 5 à 7 pour un porte-pièce (1) comportant au moins trois parties porte-pièce (4, 5, 6), **caractérisée en ce que** la partie porte-pièce (5) est agencée avec la surface d'ajustement (9) entre deux des autres parties porte-pièce (4, 6).
